Europäisches Patentamt

European Patent Office

Office européen des brevets

(11) Publication number: **0 120 745**
**B1**

(12) **EUROPEAN PATENT SPECIFICATION**

(45) Date of publication of patent specification: **26.04.89**

(21) Application number: **84400381.4**

(22) Date of filing: **24.02.84**

(51) Int. Cl.⁴: **G 06 F 13/18, G 09 G 1/16**

(54) Apparatus permitting memory access timesharing by a plurality of users.

(30) Priority: **25.02.83 FR 8303143**

(43) Date of publication of application:
**03.10.84 Bulletin 84/40**

(45) Publication of the grant of the patent:
**26.04.89 Bulletin 89/17**

(84) Designated Contracting States:
**DE FR GB IT**

(56) References cited:
**EP-A-0 030 007**
**EP-A-0 087 868**
**FR-A-2 406 250**
**US-A-3 376 554**

(73) Proprietor: **TEXAS INSTRUMENTS FRANCE**
Société dite:
**F-06270 Villeneuve Loubet (FR)**
㊙ **FR**
(73) Proprietor: **TEXAS INSTRUMENTS**
**INCORPORATED**
**13500 North Central Expressway**
**Dallas Texas 75265 (US)**
㊙ **DE GB IT**

(72) Inventor: **Chauvel, Gérard**
**10 Avenue des Chênes**
**F-06800 Cagnes sur Mer (FR)**

(74) Representative: **Moncheny, Michel et al**
**c/o Cabinet Lavoix 2 Place d'Estienne d'Orves**
**F-75441 Paris Cedex 09 (FR)**

Courier Press, Leamington Spa, England.

## Description

The instant invention relates to a device for distributing a memory access time among a plurality of users.

It is known, in the microprocessor art, to coordinate the reading into and writing from a random access memory or RAM, with two or more users, one user being the central processing unit or RPU, and the other user or users being capable of accessing the memory during the periods of the so-called dynamic access to the memory or DMA. For example, if a large amount of data are to be written into the memory, a DMA control circuit directly accesses the memory, without the intervention of the CPU and, above all, without having the CPU cycle controlling access to the memory.

A circuit of this type is described in FR—A—2 406 250. In this application, two alternatives in the control of memory access are described, one in which the request to the memory by the CPU and by another user is synchronous with the clock of the CPU and, another in which the control takes place in a totality asynchronous manner with respect to this clock, the access to the memory by the various users (including CPU) being controlled as a function of a certain priority. In the case described, it is the CPU which has first priority and each time that it requests access to the memory, it will receive memory cycle time either immediately, if no other cycle is in progress, or in the following cycle, if a current cycle is assigned to another user, the access demands of other users being held on wait and subsequently processed as a function of their priority. During this process, a user having a higher priority can always intervene to request access which will be obtained over a request of a user having a lower priority.

Known "DMA circuits" (this abbreviation will be used hereinafter to designate the circuit according to the invention) provide for memory exploitation with great efficiency despite the presence of a plurality of users. Of course, the duration of the cycles which are processed by the DMA cannot be shorter than those of the memory itself which are determined by the particular technology of the system.

It is known that memories integrated on semiconductor chips consist of matrixes of memory cells distributed in rows and columns, which are addressed by row and column addresses. The construction of these memories is such that there is required, for a column or row addressing cycle, a certain "preloading" time necessary for placing the circuits associated with the matrix into the condition of selected read/write. The preloading time of the rows is generally substantially longer than the column preloading time. For example, for a memory access cycle of 250 ns, a time period which is usual in currently available RAM memories, there is required a preloading time of 100 ns for the rows, while, for the columns, a few dozen ns will be sufficient.

In addition, in modern RAM memories, each row can have a plurality of bytes of memory cells which are addressed separately by the column addresses so that each time it is desired to address a predetermined byte, there will be a complete memory cycle having a long access time for the rows and a short access time for the columns. Consequently, when a memory zone of the RAM is loaded at all of these successive addresses, for example, in the case of a page memory of a cathode ray tube visualization system, it is necessary to execute for each address a complete memory cycle, which entails that the "row" access uses up a very large portion of the total time for writing into or reading in the memory.

EP—A—0 087 868 cited in accordance with A. 54(3) and (4) of EPC, discloses a graphics display refresh memory architecture wherein several address locations of the memory can be addressed with several column address strobe signals while using only one row address strobe signal.

This memory architecture is coupled to an access path concerning a request from a user and to another access path from the display refresh read address generator with the refresh request having priority over the user requests and with signals indicating to which path access is granted. In a page mode an access cycle with a plurality of column cycles for a single row cycle may be allocated to the user. Such an access cycle may be interrupted by a signal indicating that a last column for a current row is reached. A second interruption of such a page mode access cycle may occur if a refresh request is made.

EP—A—30 007 discloses an integrated memory element said memory element comprising memory cells, arranged in a matrix which are addressable by row and column addresses controlled by now and column strobe signals, wherein a plurality of column strobe signals may occur for a single row strobe signal.

US—A—3 376 554 discloses a digital data processing system of one or more processors and plural memory units. A processor requests service from a single memory unit and is signalled when the request is accepted. Each memory unit selects one of plural simultaneous service requests on a priority basis. Each memory unit has asynchronous linint circuits such that a memory cycle timer is started upon a request and such that a new priority arbitration is allowed only after the end of the cycle or cycles done for a processor which has been granted access.

The invention has as an object a control circuit which provides a better distribution, among a plurality of users, of the access time to a memory while also reducing, to the minimum, the reading and writing time of the information into or in the matrix of this memory.

According to the invention there is provided an asynchronous control device adapted to access by a plurality of users to a RAM memory, the access of which is controlled by row (RAS) and column (CAS) strobe signals accompanying respectively the row and column addresses which identify the locations of the memory matrix, wherein a read/write operation is to be effected, this device including for each user, a processing path for the access requests presented by the users, the processing paths being interconnected in such a manner that the access requests presented at the inputs of the paths are granted at the outputs of the paths with the priority with which the users are classified for accessing to the memory, a generator circuit which, from the time an access request is presented, generates a signal (CYCLE) the duration of which determines a complete access cycle of the memory allocated to the user to which access requests is granted and at the end of which signal a new signal may be generated which grants an access to another user and which generates during each such access cycle, said strobe signals (RAS, CAS), said device further comprising means in said circuit generator of said duration signal (CYCLE) for allocating to at least certain of said users, a plurality of column strobe signals (CAS) for a single row strobe signal (RAS), first interruption means which, when a user ascertains that the end of a row of the memory matrix is reached, interrupt the execution of a series of column strobe signals (CAS) for said current row strobe signal to generate a new row strobe signal, and second interruption means adapted to interrupt the execution of one user access cycle with a series of current column strobe signals (CAS), to grant a new access cycle to another user, when a request for access to the memory is presented by said other user having a higher priority of access and means to memorize the remaining number of current column strobe signals in order to carry on the interrupted cycle after the execution of the higher priority cycle.

Because of these features, while considering a given priority among the users of the memory, each complete memory access cycle can be executed by a single row cycle, at the corresponding row address, by means of a row enabling signal, which is maintained during the row preloading time and throughout the duration of one or more column cycles executed with the column addresses which is progressively incremented, and enabled by at least one column validation signal, the number of column cycles per row cycles being determined by the users of the memory.

It is understood that thus, when the data are to be read in or written into the memory at contiguous addresses, there will be a considerable time saving as the preloading time for the row is not required, except for a single time period for allowing access to a contiguous series of memory locations. However, the user remains in control of the desired number of column cycles; the user itself can determine if a single column cycle or a plurality of column cycles are necessary, the priority between the users being in all cases respected.

An embodiment of the invention will appear in the following description. The figures are presented solely as examples.

Figure 1A and 1B are timing diagrams for the cycles of the memory having respectively a single column access and a plurality of column accesses per row access.

Figure 2 is a diagram of a DMA circuit where there are three users, one of which requires multiple column access.

Figure 3 is a simplified diagram of a teletext terminal, to which the invention finds application.

Figure 4 shows a DMA circuit used in a teletext terminal according to the invention.

Figure 5 is a timing diagram of the Figure 3 circuit.

Figure 6 is another timing diagram of the Figure 3 circuit.

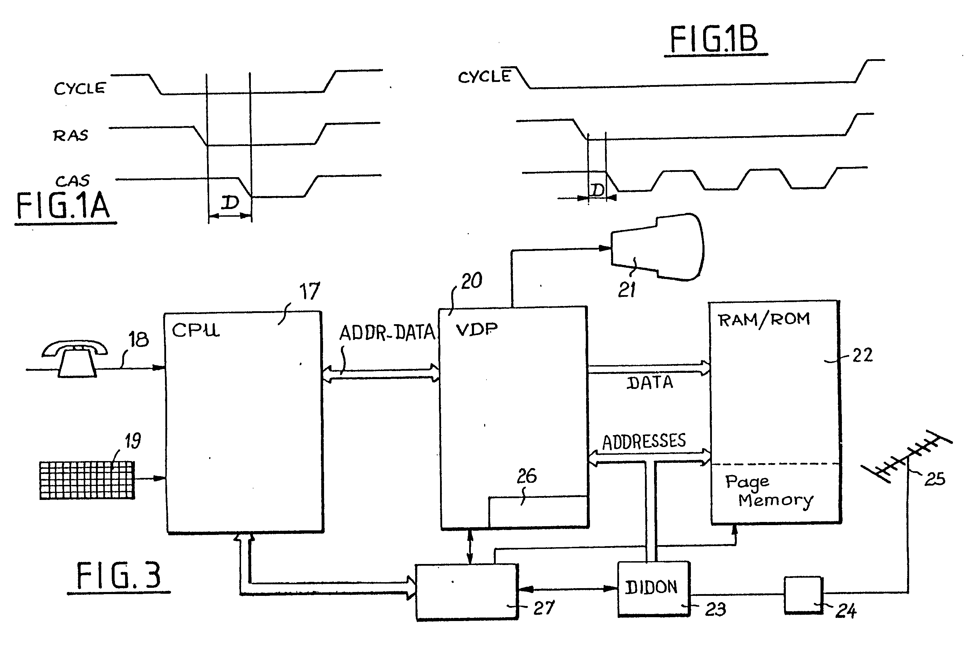

Figure 1A shows a timing diagram of a simple memory access cycle. During the complete cycle time represented by the cycle signal, there are generated a RAS signal (row address strobe) and a CAS signal (column address strobe) which accompany the row address and the column address which locate a particular byte by an address in the memory matrix. It is seen that the RAS pulse is substantially longer than the CAS pulse by a duration D which represents the difference between the preloading durations of the row and column circuits.

Figure 1A relates for example to communications between a central processing unit CPU and the memory, wherein each read/write operation entails addressing of a single memory cell. This can be otherwise when the memory user is a circuit which requests, for example, the writing of a series of data at numerous successive addresses in the memory, which is the case, for example, of a page memory memorizing an image for each frame to be displayed on the screen of a sweeped frame cathode ray tube. In this case, the data are successively written into the memory at the addresses starting at the beginning of a row (first byte), after which the other bytes of the row are filled up, one after another, by incrementation of the column address. At the end of a row, the row address is incremented by one unit to permit the loading of the following row of the memory matrix. It is clear that if there is utilized the conventional addressing system of Figure 1A, eachloading of a byte requires the sum of a preloading time RAS and a preloading time CAS while, actually, the row address does not change. For this reason, the invention utilizes, in such a case, only one single row addressing for a plurality of column addressings which is seen in Figure 1B.

In Figure 1B, the signal CYCLE is maintained as long as a memory row is loaded, the signal RAS being generated only a single time during this operation and also maintained during the entire cycle. on the other hand, the signal CAS is repeated as many times as necessary (for example, the number of columns which are in the memory). Because of this control, the time for storing data into a row is substantially shorter and considerable memory access time can be saved.

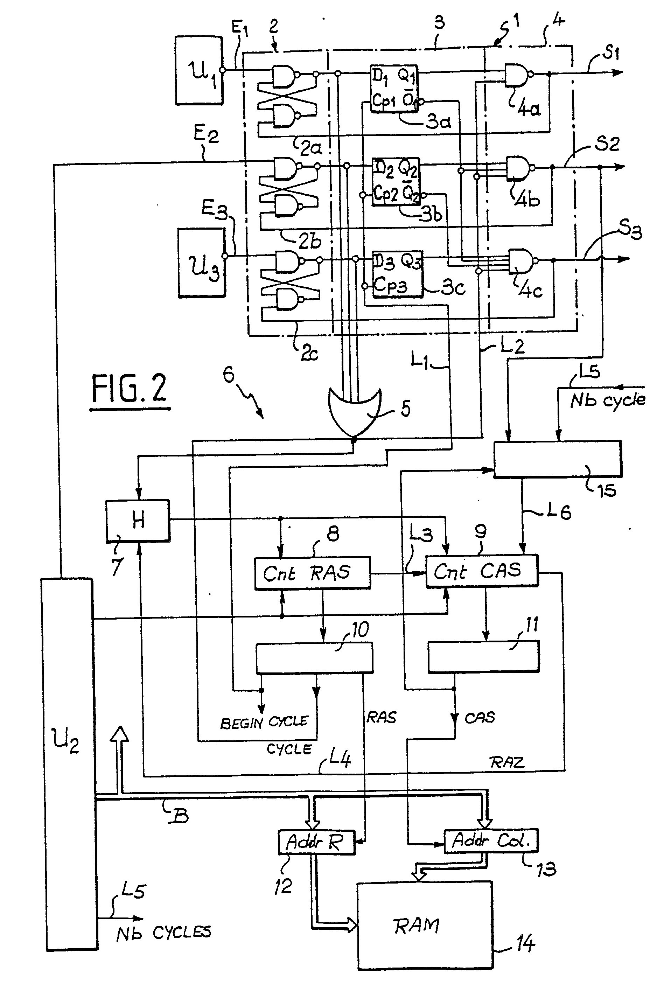

Figure 2 shows a DMA circuit which allows the obtainment of an access, in time sharing, to a memory which according to the type of user, is "monocycle" (Figure 1A) or "multicycle" (Figure 1B). The DMA circuit includes an asynchronous control logic circuit 1 which produces on its outputs S1, S2, S3, cycle signals adapted to allocate to the users U1, U2, U3 an access time to the RAM memory, as a function of the access requests which the users present during the operation. The access request signals are applied to inputs E1, E2 and E3 by the users.

As described in the above cited FR—A—2 406 250, the asynchronous control logic circuit includes three essential parts, namely a preliminary memorization circuit 2, for the access requests, which is connected to a memorization circuit 3 for access requests in progress, this circuit 3 being, in turn, connected to a priority logic 4. The construction and operation of the logic circuit will be briefly discussed below.

In the embodiment shown, the control logic circuit is a three path circuit. There is no phase relation among the three paths. The outputs of the circuits 2a, 2b, 2c are connected to the inputs of a NOR gate 5, the output of which is connected to the input of a processing circuit 6 for the RAS and CAS signals.

This circuit 6 is connected, on the one hand, to memorization circuits 3a, 3b, 3c for access requests in progress, and, on the other hand, to an input of each of three NAND gates 4a, 4b, 4c constituting the three paths of the logic priority circuit 4, by lines L1 and L2 on which circulate the signals "start cycle" and "cycle" respectively.

Gate 4a is a two input gate, one input being connected to a first output of circuit 3a, the other connected to line L2.

Gate 4b is a three input gate, one input connected to a line L2, another connected to a second output of circuit 3a, and another to the first output of circuit 3b.

Gate 4c is a four input gate, one input connected to line L2, and the others connected to outputs of circuits 3a, 3b, 3c.

The circuit thus constructed stores the requests for access to the memory and classifies the requests according to an arrival order or a priority order.

It is here assumed that path E1S1 has the highest priority, the path E2S2 requires an access of the "multi-cycle" type, and the paths E1S1 and E3S3 require only "monocycle" access.

When the input E1 is brought to a low level by an access request of the user U1, the RS flip-flop 2a changes state, so that the input D1 of circuit 3a goes to 1, which entails the changing of the state of the output of NOR gate 5, which causes, by means of circuit 6 to be described hereinafter, the appearance of a pulse on line L1. The leading edge of this pulse is used to store the access request in the D-type flip-flop 3a, the output Q1 of which goes to a high level.

The combination of the signal Q1 and the signal on line L2 appearing at the inputs of gate 4a authorizes a pulse on output S1.

When S1 is low, flip-flop 2a is reset to its initial state. Line L1 again goes high.

At the end of the memory access cycle, the line L1 is again low and the signal of line L2 again causes the output S1 to go high.

Up until now, the circuit which has been described operates as in the above cited FR—A—2 406 250 with the signals being transferred on lines L1 and L2 with a given time interval between each other.

There will now be described the other elements of the arrangement which permit the generation of these signals on these two lines L1 and L2 in a manner very different from that described in the above cited FR—A—2 406 250.

The output of NOR gate 5 is connected to clock 7 which is triggered when a signal is generated at the output of this gate. This clock is connected to two counters 8 and 9 of the RAS and CAS signals, respectively. These are connected to decoders 10 and 11, decoder 10 providing a signal "Begin Cycle" (line L1) and a signal "CYCLE" (line L2) and a signal RAS. Decoder 11 generates a CAS signal. The RAS and CAS signals are sent along the appropriate lines to row address buffer 12 and column address buffer 13 for enabling the addresses which were loaded therein from an address bus B connected to users U1, U2, U3, the bus of user U2 being the only one represented in the Figure. The address buffers are connected to RAM 14.

Upon reception of a signal from NOR gate 5, the clock starts control of counter 8 which, after having received a number of pulses corresponding to the row preloading time (duration D), triggers counter 9 over line L3. Decoder 10 produces signals BEGIN CYCLE and CYCLE, this latter signal being maintained while RAS counter 8 continues to accumulate clock pulses. The CAS counter counts up according to the rate of these clock pulses, generating the CAS signal through decoder 11. After having counted the number of pulses corresponding to the duration of CAS cycle, counter 9 sends a reset signal RAZ on line L4 to clock 7, which stops the clock.

Meanwhile, the row and column address buffers 12 and 13 have transferred the corresponding addresses in RAM 14 during the RAS and CAS signals, the RAS counter 8 is reset by line L9, the signal CYCLE is cancelled and gate 4a is disabled. At the same time, flip-flop 2a is reset.

User U2 is assumed to load memory 14 with a plurality of successive column addresses by a single row address. The number of CAS cycles can be controlled by the user itself, the appropriate signal being provided on line L5 which connects user U2 to a cycle number register 15. This register is enabled by the signal appearing on lead S2 when the output of gate 4b appears after a memory access request on lead E2 from user U2. The cycle number is loaded into register 15 and it is decremented by a unit each time the CAS signal is produced by counter 9. As long as register 15 is not emptied, it produces at its output (conductor L6), a signal which inhibits, in counter 9, the output producing the reset signal on line L4.

Clock 7 will not be latched after the end of the first CAS cycle and will continue to increment RAS counter 8 and cyclically counter 9 until at the end of the cycle, the signal on line L6 authorizes the production of reset signal RAZ on line L4 when register 15 is empty.

The production of the signal on lead S2 takes place in an identical manner to that of the signal on lead S1, with appropriate priority being, of course, taken into consideration.

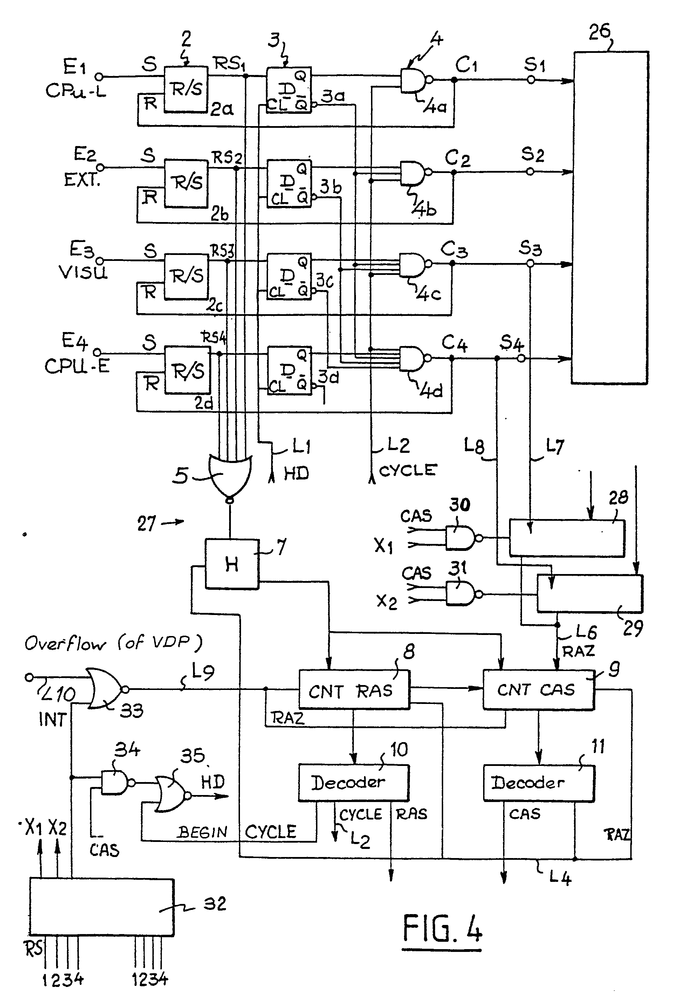

It is noted that the Figure 2 circuit allows for the control, in time sharing, of the access to the memory by a plurality of users, and this totally asynchronously and with regard to a particular priority assigned to the users. The users can be part of the same data processing system using a common RAM memory. A particularly appropriate application of the invention is in the field of teletext systems. Figure 3 shows a very simplified diagram of a terminal for a teletext display utilizing, for example, the "antiope" system.

Such a terminal includes a central processing unit CPU 17 which receives instructions and information from a plurality of sources 18 and 19, such as a telephone line or a keyboard. The CPU 17 cooperates with video display processor VDP 20, which prepares the image information by transforming it into a form which can be utilized by a sweeped frame cathode ray tube 21. The CPU 17 and the VDP 20 cooperate with a mixed RAM/ROM memory 22, by means of an address bus and a data bus. Circuit 23, of the "didon" type, can communicate with the terminal from a receptor station 24 and antenna 25, receiving a television type signal with interlaced teletext information.

The VDP 20 includes a decoder circuit 26 which, depending upon the addresses received from the CPU 17, enables the registers (not shown) of the VDP by placing them selectively into the several function modes of image composition, memory loading, video information reception, memory refreshing, etc.

The access to the memory by the users (CPU 17, VDP 20, and "didon" 23) is controlled by access control circuit 27, constituted in accordance with the invention, such as the circuit of Figure 4, it being understood that the circuit here specifically applies to a teletext terminal of the Figure 3 type.

The access to the memory is here also controlled in an asynchronous manner, as a function of a priority which is established in the following manner:

Priority 1—reading of a byte in the memory under control of CPU 17.

Priority 2—writing of a byte into the memory coming from "didon" circuit 23.

Priority 3—reading of a set of bytes in the page memory, each byte belonging to a "memory plane".

Priority 4—writing a set of bytes into the memory coming from the CPU or another zone of the memory (character generator for example).

It is seen that priorities 3 and 4 entail a loading or a reading of a series of successive bytes which is a case of multicycle operation 8 as described above.

The access control circuit of Figure 4 includes essentially the same elements as Figure 2 and these elements have the same reference numbers. There will now be described the elements specifically added for the teletext terminal application.

The cycle number register 15 is here made up of two registers 28 and 29, one for storing a number of "memory planes" and the other for storing a number of writing cycles to be effected when the multicycles are to be effected respectively by paths 3 and 4 of the access control circuit. The registers 28 and 29 are enabled by signals S3 and S4, respectively, their enabling inputs being connected by lines L7 and L8 to the corresponding leads S3 and S4. Each of the registers includes a zero output, on which appears a signal when the register is empty, for authorizing the production of the RAZ signal applied to the CAS counter, as described in regard to register 15. The registers 28 and 29 are decremented by NAND gates 30 and 31 which are enabled by the CAS signals and the respective signals X1 and X2 from comparator 32. This comparator includes two sets of inputs which are connected to outputs RS1—RS4 of the flip-flops 2a—2d and to the outputs of NAND gates 4a—4d for comparing the logic levels, and thus, the state of the access requests effected with the access cycles in the course of execution.

Comparator 32 has outputs X1 and X2 connected to gates 30 and 31 and an output INT which is connected to NOR gate 33, the output of which resets counters 8 and 9 over line L9. This resetting can also be ordered by a signal OVERFLOW on line L10 from the arithmetic and logic unit (not shown) of VDP 20. This signal is generated when an address is loaded into the location of a row corresponding to the last column of the memory. In this case, the loading is interrupted, the row address is incremented, and the loading is restarted with a new column address corresponding to the first cell of the following row designated by the incremented row address.

This signal INT is also combined with the CAS signal in NAND gate 34 which in turn is connected to NOR gate 35, receiving the signal BEGIN CYCLE generated at the proper moment by decoder 10.

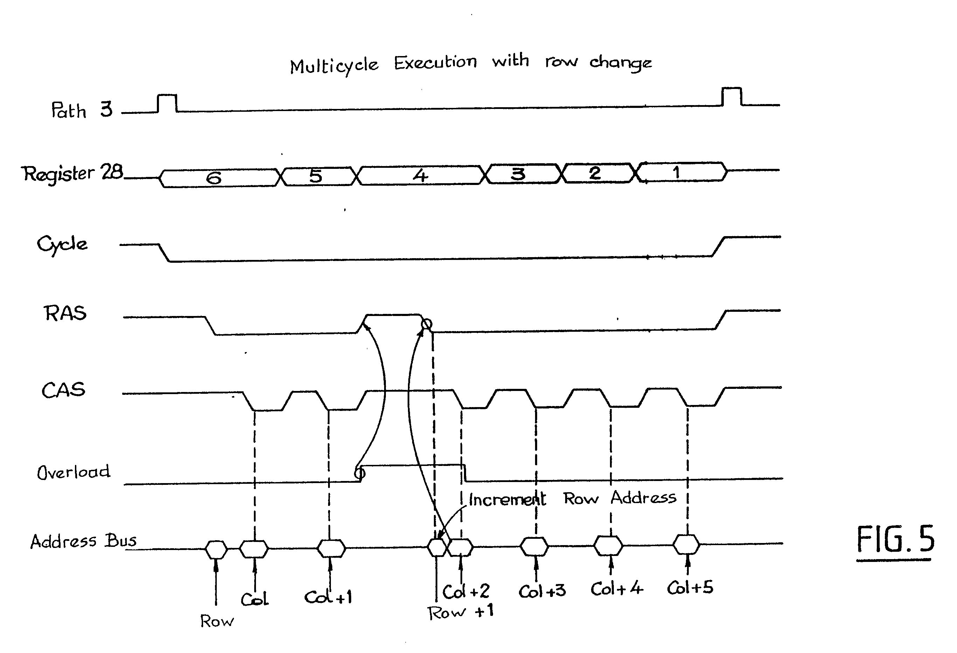

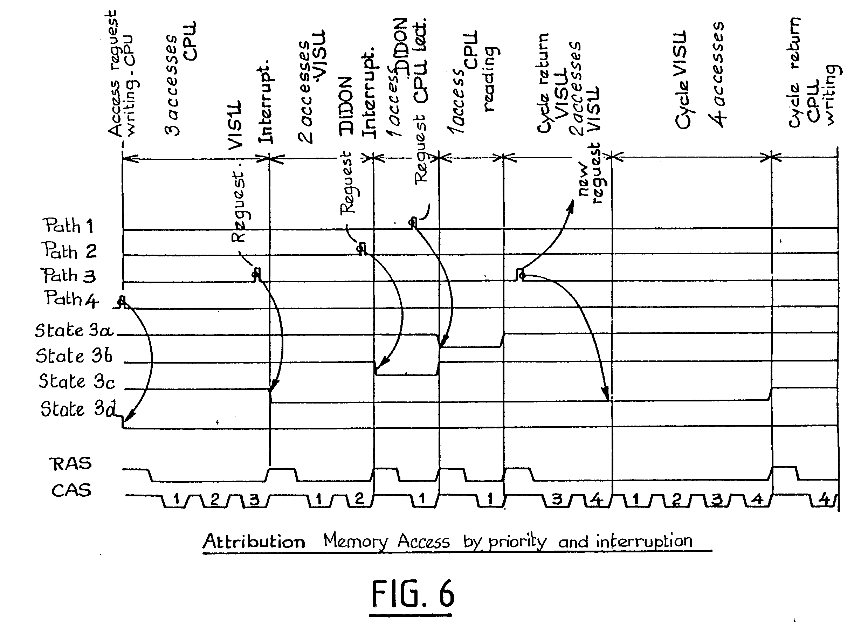

There will now be described the operation of the circuit of Figure 4 in connection with the time diagrams of Figures 5 and 6.

A—Request CPU—Read (monocycle)

Assume that there is a CPU request for reading a byte in the memory, the signal being thus applied to line E1 (Figure 4). It is also assumed that the DMA circuit is not executing any request at the moment. The signal on lead E1 generates RS1=1 which is applied to NOR gate 5, which triggers clock 7. This controls counters 8 and 9, and the decoder 10, associated with RAS counter 8, generates the signal "BEGIN CYCLE", which, passing through NAND 35, produces signal HD on line L1. Signal HD stores the state of flip-flops RS1—RS4 in the associated D flip-flops. In the case under consideration here, only the D flip-flop 3a produces a "1" at its output Q. The signal CYCLE produced by the decoder 10 is at "1" during the cycle and enables gate C1 for generating a control signal for circuit 26, which places the appropriate elements of VDP 20 (Figure 3) into a configuration permitting the direct reading into the memory by the CPU. The output signal of gate 4a is also sent to flip-flop RS1 at the end of the cycle.

If there are a plurality of successive requests, or requests in progress, the logical combination of the outputs $\bar{Q}$ of D flip-flops, 3a—3d, and the gate inputs 4a—4d, provide the generation of control signal S1, S2, S3 or S4, having the highest priority (here, in increasing priority, C1—C2—C3—C4).

B—Visu request or CPU—Writing (multicycle)

Such a request entails, for example, the reading in or writing into in the page memory of a large number of bits. During a VISU request, each bit belongs to a predetermined "memory plane". The term "memory plane" is utilized here to designate a group of memorized bytes, or bytes to be memorized, all of them relating to a predetermined color to be displayed. For example, there can be a red, blue or green memory plane, the bytes of each plane not being necessarily contiguous with each other in the memory.

The starting of the multicycle is identical to that of the monocycle, however, during the production of signal S3 (or S4), registers 28 or 29 are loaded with a value which, for path 3, is a number of memory planes and, for path 4, a number of CAS cycles. In both cases, a single RAS cycle is necessary for a plurality of CAS cycles. In other words, the CAS signal is repeated, with its preloading time, as long as counter 28 or 29 does not count down to 0 because of decrementation by the CAS signal. This decrementation is enabled each time by signals X1 and X2 via gates 39 and 31 for interrupting the execution of the following group of CAS cycles when a higher priority request is present. This point will be returned to in regard to Figure 6.

Figure 5 shows a timing diagram of a multicycle execution with 6 memory planes, this number 6 being stored in counter 28. The same Figure 5 illustrates the passage from one row to another when the column address corresponds to the last address of a row (here when counter 28 has been decremented twice). When the last column address of a row is reached, the ALU of the VDP 20 provides the OVERLOAD signal which, by means of gate 33, resets counters 8 and 9 to 0, in synchronism with clock 7 for a new RAS cycle. The address of the row is incremented by one unit, and the new CAS cycles are executed successively, until the counter 28 reaches 0. It is seen that the decrementing of this counter is provisionally stopped during the passage from one row to the following and, after this passage, the CAS signal, successively produced, continues to decrement counter 28, which states the number (4) of CAS cycles remaining to be executed.

In a general manner, when a request over path 4 is triggered (CPU writing), a large number of CAS cycles is necessary for a single RAS cycle. However, this does not prevent the intervention of a higher priority user to the access of the memory. For example, in the case of a teletext system, path 2 allows the reception of exterior data, which data provide the information to be displayed, and this path is essential if one does not wish to lose the message information to be transmitted. For example, path 2 (didon circuit 23) requests writing into the memory of a byte each 1.3 microseconds, and such a byte must not be lost.

The DMA circuit according to the invention can interrupt a multicycle request in the process of execution if a higher priority path requests access to the memory. This is seen in Figure 6. In this example, the circuit initially satisfies a request on path 4 to execute writing by the CPU into the memory. Thus, three CAS cycles are executed. At the end of the third CAS cycle of path 4, another request is presented on path 3 which causes the production of the INT signal, applied to gate 33, by comparator 32. This comparator continually compares the state of flip-flops RS1—RS4 (requests made), with the state of the outputs of gates C1—C4 (cycles in the process of execution). If the binary number applied to inputs RS of comparator 32 is not higher than those on inputs C, the comparator produces the INT signal resetting counters 8 and 9 and precluding any new transfer of the CAS signal through gates 30 and 31 by the X1 and X2 signals. The INT signal, as the OVERFLOW signal previously, generates the HD signal which allows storing of the new state of the RS flip-flops in the D flip-flops when the current CAS signal goes high.

The DMA circuit provides for access in two cycles to path 3 (in the case represented in Figure 6), after which another request having an even higher priority is presented. After a memory cycle permitting the memorization of a bit of path 2 (didon), another higher priority request is presented by the CPU (reading). Thus, there are successively executed, in the same manner, with consideration of the priorities, two CAS cycles of path 3 which were not executed previously when the request of path 2 was presented, four cycles of the path 3 initiated by the new access request of this path, then, the return to the cycles of path 4 in a plurality of cycles. Of course, at each interruption of a multicycle, the number of CAS cycles remaining to be executed remains stored in the corresponding counter 28 or 29.

**Claims**

1. An asynchronous control device adapted to access by a plurality of users ($U_1$, $U_2$, $U_3$, 17, 20, 23) to a RAM memory (14; 22) the access of which is controlled by row (RAS) and column (CAS) strobe signals accompanying respectively the row and column addresses which identify the locations of the memory matrix, wherein a read/write operation is to be effected, this device including for each user, a processing path $(E_1S_1—E_4S_4)$ for the access requests presented by the users, the processing paths being interconnected in such a manner that the access requests presented at the inputs $(E_1—E_4)$ of the paths are granted at the ouputs $(S_1—S_4)$ of the paths with the priority with which the users are classified for accessing to the memory (14; 22), a generator circuit (27, Figure 4) which, from the time an access request is presented, generates a signal (CYCLE) the duration of which determines a complete access cycle of the memory allocated to the user to which access request is granted and at the end of which signal a new signal may be generated which grants an access to another user and which generates during each such access cycle, said strobe signals (RAS, CAS), said device further comprising means (7, 8, 9, 28, 29) in said circuit generator of said duration signal (CYCLE) for allocating to at least certain of said users (U1, U2, U3, 17, 20, 23) a plurality of column strobe signals (CAS) for a single row strobe signal (RAS), first interruption means (L9, 33) which, when a user (U2) ascertains that the end of a row of the memory matrix is reached, interrupt the execution of a series of column strobe signals (CAS) for said current row strobe signal to generate a new row strobe signal, and second interruption means (32, 33) adapted to interrupt the execution of one user access cycle with a series of current column strobe signals (CAS), to grant a new access cycle to another user, when a request for access to the memory is presented by said other user having a higher priority of access and means (28, 29) to memorize the remaining number of current column strobe signals in order to carry on the interrupted cycle after the execution of the higher priority cycle.

2. Device according to Claim 1, characterized in that said allocating means comprise a clock circuit (7) which is connected to each of the processing paths $(E_1S_1—E_4S_4)$ for being triggered each time that a request for access is presented by the user $(U_1—U_3: 17, 20, 23)$, a first counting device (9, 11) connected to said clock and which, taking account of the frequency of said clock, determines by its capacity the duration of a column (CAS) cycle and a second counting device (8, 10) also connected to said clock and capable of authorizing said first counting device to count after reception of a number of clock pulses corresponding to the row cycle (RAS) of said RAM memory, and in that there is provided at least one register (28, 29) for containing a number corresponding to the number of column cycles to be effected for a complete access cycle, said register being connected to said first counter for being decremented for each column cycle of this counter thereby memorizing said remaining number of column strobe signals (CAS), and said clock (7) being inhibited, when the number stored in said register reaches the value zero.

3. Device according to Claim 2, characterized in that each counting circuit (8, 10; 9, 11) includes a counter (8, 9) of which the control input is connected to said clock (7), the counter of the second counting circuit includes an output $(L_3)$ on which is delivered a strobe signal to the counter (9), of the first counting circuit, when a number of clock pulses corresponding to the row precharge time is counted by the counter (8) of the second counting device.

4. A device according to Claim 3, characterized in that each counter (8, 9) is connected to a decoder (10, 11) which delivers the signal (CAS and RAS) established respectively between the beginning and the end of the counting of the clock pulses by the respective counter.

5. A device according to any one of the Claims 3 or 4, characterized in that said signal (CYCLE), the duration of which determines the duration of a complete access cycle to the memory is generated by the decoder (10) of said second counting device (8), said signal being maintained while said second counting device (8) continues to accumulate clock pulses during a complete access cycle of the memory.

6. A device according to any one of Claims 3 through 5, characterized in that said first interruption means includes a logical gate (33) responsive to an overflow signal provided by said user $(U_2)$, when a location of the memory row is loaded at an address corresponding to the last column of the memory, the output of said logical gate (33) being connected to the reset inputs of said counters (8, 9).

7. A device according to any one of Claims 1 through 6, characterized in that said second interruption means (32, 33) include a comparator (32) connected to the inputs $(E_1—E_4)$ and to the outputs $(S_1—S_4)$ of said paths $(E_1S_1—E_4S_4)$ for comparing their logical states and which produces an interruption signal when the logical state of the inputs has a higher binary value than the logical state of the outputs.

8. A device according to Claims 6 and 7 taken together, characterized in that the output of the comparator (32) is connected to said logical gate (33), the output of which being connected to the reset inputs of the counters (8; 9).

9. A device according to Claim 8, characterized in that said comparator (32) includes at least one additional output (X1, X2) is peculiar to the user to which is associated a register (28, 29) for memorizing the required number of column cycles (CAS), for interrupting the decrementing of this register by said first counting device (9, 11) when said comparator (32) produces an interruption signal (INT).

10. A device according to any one of the Claims 2 through 9, characterized in that said users are respectively the CPU (17), the video processor (20) and the teletext signal receiver (23) of a teletext terminal, users to which are respectively associated said processing paths $(E_1S_1—E_4S_4)$

and in that at least the paths assigned to the video processor and to the writing operations into the memory of said CPU (17) are connected respectively to a register (28, 29) for memorizing a value which represents the number of times that a column access must be effected for a complete access cycle.

**Patentansprüche**

1. Asynchrone Steuervorrichtung für den Zugriff auf einen RAM-Speicher (14; 22) durch mehrere Benutzer ($U_1$, $U_2$, $U_3$, 17, 20, 23), wobei der Zugriff mit Hilfe von Zeilenansteuersignalen (RAS) und Spaltenansteuersignalen (CAS) gesteuert wird, die die Zeilenadressen bzw. die Spaltenadressen begleiten, die die Speicherplätze der Speichermatrix identifizieren, in der eine Lese/Schreib-Operation durchgeführt werden soll, wobei die Vorrichtung für jeden Benutzer folgendes enthält: einen Verarbeitungsweg ($E_1S_1$—$E_4S_4$) für die von den Benutzern angegebenen Zugriffsanforderungen, wobei die Verarbeitungswege so miteinander verbunden sind, daß die an die Eingänge ($E_1$—$E_4$) der Wege angelegten Zugriffsanforderungen an den Ausgängen ($S_1$—$S_4$) der Wege mit der Priorität gewährt werden, nach der die Benutzer für den Zugang zum Speicher (14; 22) klassifiziert sind, eine Generatorschaltung (27, Figure 4), die für die Zeitdauer, für die eine Zugriffsanforderung angelegt ist, ein signal (CYCLE) erzeugt, dessen Dauer einen vollständigen Zugriffszyklus des dem Benutzer zugewiesenen Speichers bestimmt, dem eine Zugriffsanforderung gewäht wird, wobei am Ende dieses Signals ein neues Signal erzeugt werden kann, das einem weiteren Benutzer den Zugriff gewährt und das während jedes solchen Zugriffszyklus die Zeilen- und Spaltenansteuersignale (RAS, CAS) erzeugt, ferner Mittel (7, 8, 9, 28, 29) in der Generatorschaltung für das Dauersignal (CYCLE) zum Zuordnen mehrerer Spaltenansteuersignale (CAS) für ein einziges Zeilenansteuersignal (RAS) zu wenigstens gewissen Benutzen (U1, U2, U3, 17, 20, 23), ersten Unterbrechungsmitteln (L9, 33), die dann, wenn ein Benutzer (U2) feststellt, daß das Ende einer Zeile der Speichermatrix erreicht ist, die Ausführung einer Reihe von Spaltenansteuersignalen (CAS) für das laufende Zeilenansteuersignal unterbrechen, damit ein neues Zeilenansteuersignal erzeugt wird, und zweite Unterbrechungsmittel (32, 33), die die Ausführung eines Benutzerzugriffszyklus mit einer Reihe von laufenden Spaltenansteuersignalen (CAS) unterbrechen können, damit einem weiteren Benutzer, eine neuer Zugriffszyklus gewährt wird, wenn von dem weiteren Benutzer, der eine höhere Zugriffspriorität hat, eine Anforderung nach einem Zugriff auf den Speicher angelegt wird, und Mittel (28, 29) zum Speichern der restlichen Anzahl der laufenden Spaltenansteuersignale, damit der Unterbrechungszyklus fortgesetzt wird, nach dem der Zyklus mit der höheren Priorität ausgeführt ist.

2. Vorrichtung nach Anspruch 1, dadurch gekennzeichnet, daß die Zuordnungsmittel eine Taktschaltung (7) enthalten, die an jeden der Verarbeitungswege ($E_1S_1$—$E_4S_4$) angeschlossen ist, damit sie jedesmal dann getriggert wird, wenn von einem Benutzer ($U_1$—$U_3$; 17, 20, 23) eine Zugriffsanforderung angelegt wird, daß an die Taktschaltung eine erste Zählvorrichtung (9, 11) angeschlossen ist, die unter Berücksichtigung der Frequenz der Taktschaltung durch ihre Kapazität die Dauer eines Spaltenzyklus (CAS) bestimmt, wobei an die Taktschaltung auch eine zweite Zählvorrichtung (8, 10) angeschlossen ist, die die erste Zählvorrichtung zum Zählen autorisiert, nachdem eine Anzahl von Taktimpulsen empfangen worden ist, die dem Zelenzyklus (RAS) des RAM-Speichers entspricht, und daß wenigstens ein Register (28, 29) vorgesehen ist, das eine der Zahl der durchzuführenden Spaltenzyklen für einen kompletten Zugriffszyklus entsprechende Zahl enthält, wobei das Register an die erste Zählvorrichtung angeschlossen ist, damit es für jeden Spaltenzyklus dieses Zählers zurückgeschaltet wird, wodurch die verbleibende Anzahl von Spaltenansteuersignalen (CAS) gespeichert wird und die Taktschaltung (7) gesperrt wird, wenn die in dem Register gespeicherte Zahl den Wert Null erreicht.

3. Vorrichtung nach Anspruch 2, dadurch gekennzeichnet, daß jede Zählschaltung (8, 10; 9, 11) einen Zähler (8, 9) enthält, dessen Steuereingang mit der Taktschaltung (7) verbunden ist, wobei der Zähler der zweiten Zählschaltung einen Ausgang ($L_3$) enthält, an dem ein Ansteuersignal für den Zähler (9) der ersten Zählschaltung geliefert wird, wenn eine der Zeilenvorladungszeit entsprechende Anzahl von Taktimpulsen vom Zähler (8) der zweiten Zählvorrichtung gezählt ist.

4. Vorrichtung nach Anspruch 3, dadurch gekennzeichnet, daß jeder Zähler (8, 9) an einen Decodierer (10, 11) angeschlossen ist, der das zwischen dem Beginn und dem Ende des Zählers der Taktimpulse durch den jeweiligen Zählern erzeugte Signal (CAS und RAS) abgibt.

5. Vorrichtung nach einem der Ansprüche 3 oder 4, dadurch gekennzeichnet, daß das Signal (CYCLE), dessen Dauer die Dauer eines kompletten Speicherzugriffszyklus bestimmt, von dem Decodierer (10) der zweite Zählvorrichtung (8) erzeugt wird, wobei das Signal aufrechterhalten wird, während die zweite Zählvorrichtung (8) weiterhin während eines vollständigen Speicherzugriffszyklus Taktimpulse aufaddiert.

6. Vorrichtung nach einem der Ansprüche 3 bis 5, dadurch gekenzeichnet, daß das erste Unterbrechungsmittel ein logisches Gatter (33) enthält, das abhängig von einem von dem Benutzer (U2 gelieferten Überlaufsignal arbeitet, wenn ein Speicherplatz einer Speicherzeile an einer der letzten Spalte des Speichers entsprechenden Adresse geladen wird, wobei der Ausgang des logischen Gatters (33) mit den Rückstelleingängen der Zähler (8, 9) verbunden ist.

7. Vorrichtung nach einem der Ansprüche 1 bis 6, dadurch gekennzeichnet, daß das zweite Unterbrechungsmittel (32, 33) einen Komparator (32) enthält, der an die Eingänge ($E_1$—$E_4$) und an die Ausgänge ($S_1$—$S_4$) der Bearbeitungswege ($E_1S_1$—$E_4S_4$) angeschlossen ist und deren logiches Zustände vergleicht und der ein Unterbrechungssignal erzeugt, wenn der logische Zustand der Eingänge einen höheren Binärwert als der logische Zustand der Ausgänge hat.

8. Vorrichtung nach Anspruch 6 und 7, zusammengenommen, dadurch gekennzeichnet, daß der Ausgang des Komparators (32) mit dem logischen Gatter (33) verbunden ist, dessen Ausgang an die Rückstelleingänge der Zähler (8; 9) angeschlossen ist.

9. Vorrichtung nach Anspruch 8, dadurch gekennzeichnet, daß der Komparator (32) wenigstens einen zusätzlichen Ausgang (X1, X2) aufweist, der zu dem Benutzer gehört, dem ein Register (28, 29) zugeordnet ist, das die erforderliche Anzahl von Spaltenzyklen (CAS) für das Unterbrechen der Zurückschaltung dieses Registers durch die erste Zählvorrichtung (9, 11) speichert, wenn der Komparator (32) ein Unterbrechungssignal (INT) erzeugt.

10. Vorrichtung nach einem der Ansprüche 2 bis 9, dadurch gekennzeichnet, daß die Benutzer die CPU, (17) der Videoprozessor (20) und der Teletext-Signalempfänger (23) eines Teletext-Terminals sind, also Benutzer, denen die Verarbeitungswege ($E_1S_1$—$E_4S_4$) jeweils zugeordnet sind, und daß zumindest die Wege die dem Videoprozessor und den Schreiboperationen in den Speicher der CPU (17) zugeordnet sind, jeweils an ein Register (28, 29) angeschlossen sind, in dem ein Wert gespeichert ist, der die Zahl repräsentiert, wie oft für einen vollständigen Zugriffszyklus ein Spaltenzugruff durchgeführt werden muß.

**Revendications**

1. Dispositif de commande asynchrone d'accès par plusieurs utilisateurs (U1, U2, U3, 17, 20, 23) à une mémoire RAM (14; 22) dont l'accès est commandé par des signaux de validation de rangée (RAS) et de colonne (CAS) accompagnant respectivement les adresses de rangée et de colonne qui identifient les emplacements de la matrice de mémoire, où une opération de lecture/écriture doit être réalisée, ce dispositif comprenant pour chaque utilisateur, une voie de traitement ($E_1S_1$—$E_4S_4$) pour les demandes d'accès formulées par les utilisateurs, les voies de traitement étant interconnectées de telle manière que les demandes d'accès présentées aux entrées ($E_1$—$E_4$) des voies, soient satisfaites aux sorties ($S_1$—$S_4$) des voies avec la priorité selon laquelle les utilisateurs sont classés pour accéder à la mémoire (14; 22), un circuit générateur (27, Figure 4) qui, dès qu'une demande d'accès est formulée, engendre un signal (CYCLE) dont la durée détermine un cycle d'accès complet à la mémoire alloué à l'utilisateur auquel la requête d'accès est accordée et à la fin de ce signal, un nouveau signal peut être engendré qui accorde un accès à un autre utilisateur et qui engendre au cours de chacun de ces cycles d'accès, lesdits signaux de validation (RAS, CAS), le dispositif comprenant en outre des moyens (7, 8, 9, 28, 29) dudit circuit générateur dudit signal de durée (CYCLE) pour allouer à au moins certains desdits utilisateurs ($U_1$, $U_2$, $U_3$, 17, 20, 23) plusieurs signaux de validation de colonne (CAS) pour un seul signal de validation de rangée (RAS), des premiers moyens d'interruption (L9, 33) qui, lorsqu'un utilisateur ($U_2$) constate que la fin d'une rangée de la matrice de mémoire est atteinte, interrompent l'exécution d'une série de signaux de validation de colonne (CAS) pour le signal de validation de rangée en cours afin d'engendrer un nouveau signal de validation de rangée, et des seconds moyens d'interruption (32, 33) adaptés pour interrompre l'exécution d'un cycle d'accès d'un utilisateur avec une série de signaux de validation de colonne en cours (CAS), pour accorder un nouveau cycle d'accès à un autre utilisateur, lorsqu'une demande d'accès à la mémoire est présentée par ledit autre utilisateur ayant une priorité d'accès plus élevée et des moyens (28, 29) pour mémoriser le nombre restant de signaux de validation de colonne en cours afin de continuer le cycle interrompu après l'exécution du cycle de priorité plus élevée.

2. Dispositif suivant la revendication 1, caractérisé en ce que lesdits moyens d'allocation comprennent un circuit d'horloge (7) qui est connecté à chacune des voies de traitement ($E_1S_1$—$E_4S_4$) afin d'être mis en marche chaque fois qu'une demande d'accès est présentée par l'utilisateur ($U_1$—$U_3$; 17, 20, 23), un premier dispositif de comptage (9, 11) connecté à ladite horloge et qui, en tenant compte de la fréquence de ladite horloge détermine par sa capacité la durée d'un cycle de colonne (CAS) et un second dispositif de comptage (8, 10) également connecté à ladite horloge et capable d'autoriser le premier dispositif de comptage à compter après la réception d'un nombre d'impulsions d'horloge correspondant au cycle de rangée (RAS) de ladite mémoire (RAM), et en ce qu'il est prévu au moins un registre (28, 29) pour contenir un nombre correspondant au nombre de cycle de colonne à effectuer pour un cycle d'accès complet, ledit registre étant connecté audit premier compteur, de manière à être décrémenté pour chaque cycle de colonne de ce compteur en mémorisant ainsi ledit nombre resistant de signaux de validation de colonne (CAS), et ladite horloge (7) étant inhibée lorsque le nombre chargé dans ledit registre atteint la valeur zéro.

3. Dispositif suivant la revendication 2, caractérisé en ce que chaque dispositif de comptage (8, 10; 9, 11) comprend un compteur (8, 9) dont l'entrée de commande est reliée à ladite horloge (7), le compteur du second dispositif de comptage comprenant une sortie (L3) sur laquelle est délivré un signal de validation du compteur (9) du premier dispositif de comptage, lorsqu'un nombre d'impulsions d'horloge correspondant au temps de précharge de rangée est compté par le compteur (8) du second dispositif de comptage.

4. Dispositif suivant la revendication 3, caractérisé en ce que chaque compteur (8, 9) est raccordé à un décodeur (10, 11) qui délivre respectivement le signal (CAS et RAS) établi entre le début et la fin du comptage des impulsions d'horloge par le compteur respectif.

5. Dispositif suivant l'une quelconque des revendications 3 et 4, caractérisé en ce que ledit signal (CYCLE) dont la durée détermine la durée d'un cycle complet d'accès à la mémoire est délivré par le décodeur (10) dudit second dispositif de comptage (8) tant que le second dispositif de comptage (8) continue à accumuler des impulsions d'horloge au cours d'un cycle d'accès complet de la mémoire.

6. Dispositif suivant l'une quelconque des revendications 3 à 5, caractérisé en ce que lesdits premiers moyens d'interruption comprennent une porte logique (33) sensible à un signal DEBORDEMENT fourni par ledit utilisateur (U2), lorsqu'un emplacement d'une rangée de mémoire est chargé à une adresse correspondant à la denière colonne de la mémoire, la sortie de ladite porte logique (33) étant raccordée aux entrées de remise à zéro desdits compteurs (8, 9).

7. Dispositif suivant l'une quelconque des revendications 1 à 6, caractérisé en ce que lesdits seconds moyens d'interruption (32, 33), comprennent un comparateur (32) qui est raccordé aux entrées ($E_1$—$E_4$) et aux sorties ($S_1$—$S_4$) desdites voies ($E_1S_1$—$E_4S_4$) pour en comparer l'état logique et qui délivre un signal d'interruption lorsque l'état logique des entrées a une valeur binaire supérieure à l'état logique des sorties.

8. Dispositif suivant les revendications 6 et 7 prises ensemble, caractérisé en ce que la sortie du comparateur (32) est reliée à ladite porte logique (33) dont la sortie est raccordée aux entrées de remise à zéro des compteurs (8, 9).

9. Dispositif suivant la revendication 8, caractérisé en ce que ledit comparateur (32) comporte au moins une sortie supplémentaire (X1, X2) qui est propre à l'utilisateur auquel est associé un registre (28, 29) destiné à mémoriser le nombre de cycles colonne (CAS) nécessaire, pour interrompre la décrémentation de ce registre par ledit premier dispositif de comptage (9, 11) lorsque ledit comparateur (32) fournit un signal d'interruption (INT).

10. Dispositif suivant l'une quelconque des revendications 2 à 9, caractérisé en ce que lesdits utilisateurs sont respectivement le CPU (17), le processeur vidéo (20) et le circuit (23) de réception de signaux de télétexte d'un terminal de télétexte, utilisateurs auxquels sont associés respectivement lesdites voies de traitement ($E_1S_1$—$E_4S_4$) et en ce qu'au moins les voies affectées au processeur vidéo et à l'écriture dans la mémoire dudit CPU (17) sont raccordées respectivement à un registre (28, 29) pour mémoriser une valeur qui représente le nombre de fois qu'un cycle d'accès colonne doit être réalisé pour un cycle d'accès complet.

FIG.1B

FIG.1A

FIG.3

EP 0 120 745 B1

FIG.2

FIG. 4

Multicycle Execution with row change

FIG.5

EP 0 120 745 B1

Attribution Memory Access by priority and interruption

## FIG. 6